# EUROPEAN PATENT SPECIFICATION

(11) **EP 3 170 398 B1**
(45) Date of publication and mention of the grant of the patent: **22.04.2020**
(21) Application number: 15822274.5
(22) Date of filing: 15.07.2015
(51) Int. Cl.: A23F 3/16, A23L 33/14

(54) **CLOUDINESS-INHIBITING AGENT FOR TEA BEVERAGE**
TRÜBUNGSHEMEMNDES MITTEL FÜR TEEGETRÄNK
AGENT INHIBITEUR DE TROUBLE POUR UNE BOISSON DE THÉ

(30) Priority: 16.07.2014 JP 2014146229
(43) Date of publication of application: 24.05.2017
(73) Proprietor: Mitsubishi Corporation Life Sciences Limited, Tokyo (JP)
(72) Inventor: NAKAO, Eiji, Saiki-shi Oita 876-8580 (JP); YASUMATSU, Yoshie, Saiki-shi Oita 876-8580 (JP); ASON, Kenichi, Saiki-shi Oita 876-8580 (JP)
(74) Representative: Müller-Boré & Partner Patentanwälte PartG mbB
(86) International application number: PCT/JP2015/070224
(87) International publication number: WO 2016/010064

(56) References cited:
- EP-B1- 1 240 306
- WO-A1-2011/126003
- WO-A1-2013/065732
- AU-A1- 2016 238 617
- JP-A- H04 311 348
- JP-A- 2000 116 327
- JP-A- 2001 045 973
- JP-A- 2002 281 948
- JP-A- 2003 235 452
- JP-A- 2004 305 090
- JP-A- 2005 278 475
- JP-A- 2006 311 856
- JP-A- 2006 333 769
- US-A1- 2002 155 126

## Description

The invention of the instant application relates to a cloudiness-inhibiting agent for a tea beverage which is obtained from yeast cell body residue.

In recent years, various tea beverages in plastic bottles, cans, or the like have become widespread. Even when a tea beverage is transparent immediately after extraction from tea leaves, the tea beverage often becomes cloudy (murky) afterwards due to effects of polyphenols and the like which are a component of the tea. In particular, when the tea beverage is cooled, the development of cloudiness is promoted. Also, cloudiness may develop due to long-term storage. Such cloudiness occurring in a manufacturing process, distribution, or during storage of a tea beverage is often disliked due to being confused for reduced quality of appearance, containing microorganisms, or the like. A mechanism causing cloudiness in a tea beverage is complex, and although studies have been conducted, the complete formation mechanism is not yet clear.

Examples of reported methods for inhibiting cloudiness of a tea beverage include a method adding tyrosine (Patent Literature 1); a method adding a saccharide (Patent Literature 2); a method adding cyclodextrin (Patent Literature 3); a method adding chondroitin sulfate (Patent Literature 4); a method using an enzyme treatment on a tea beverage (Patent Literature 5); a method rapidly cooling a tea extract liquid and removing cloudiness through centrifugal separation and diatomaceous earth filtration (Patent Literature 6); and the like.

However, each of these methods is complex, difficult work, and may alter the taste of the tea beverage or not be fully effective, for example.

Meanwhile, yeast contains components such as nucleic acid, amino acid, and peptides. An extract of yeast can be used as a source of glutathione (a pharmaceutical), or as yeast extract (a natural seasoning). However, making effective use of yeast cell body residue, which is produced in large quantities as a byproduct during extraction, has become a topic of consideration. Various methods of producing yeast extract are known which use extracting enzymes, mediums, and the like. Examples include the method of Patent Literature 7.

Cell body residue which remains after yeast extract and the like is extracted from yeast contains glucan, mannan, mannoprotein, proteins, lipids, and nucleic acids as primary components. A plurality of known publications address methods of treating such yeast cell body residue and methods of making effective use of the same. For example, Patent Literature 8 discloses a method of treating waste water by making a yeast extract residue soluble using a specific enzyme. Patent Literature 9 describes a method of producing mannose by causing a yeast extract residue to be assimilated by microorganisms. Patent Literature 10 describes a method of obtaining a medicinal composition by alkali treatment of a yeast extract residue, followed by irrigation thereof. Patent Literature 11 describes a method of obtaining a microorganism culture substrate material by allowing a cell wall lytic enzyme or the like to act on yeast extract residue. Given the situation, a more effective method of using yeast cell body residue is desired.

Patent Literature 1: Japanese Patent Laid-open Publication No. 2005-333815
Patent Literature 2: Japanese Patent Laid-open Publication No. S50-006797
Patent Literature 3: Japanese Patent Laid-open Publication No. H04-255792
Patent Literature 4: Japanese Patent Laid-open Publication No. 2004-305090
Patent Literature 5: Japanese Patent Laid-open Publication No. H09-172969
Patent Literature 6: Japanese Patent Laid-open Publication No. H04-311348, Japanese Patent Laid-open Publication No. 2007-167052
Patent Literature 7: Japanese Patent Laid-open Publication No. H05-252894, Japanese Patent Laid-open Publication No. H06-113789, Japanese Patent Laid-open Publication No. H09-056361
Patent Literature 8: Japanese Patent Laid-open Publication No. H07-184640
Patent Literature 9: Japanese Patent Laid-open Publication No. HI0-057091
Patent Literature 10: Japanese Patent Laid-open Publication No. 2001-055338
Patent Literature 11: Japanese Patent Laid-open Publication No. 2007-006838
Patent Literature 12: WO 2013/065732 A1 describes effective use of yeast and yeast extract residue.
Patent Literature 13: EP 1 240 306 B1 describes a process for stabilizing wine.

An issue to be resolved is to easily inhibit cloudiness of a tea beverage and maintain clarity of the tea beverage. To do this, a substance is preferably used which is highly safe for foods and beverages and has no taste, and which can be manufactured at a low cost with a method having a low environmental impact. Another issue is to make effective use of yeast cell body residue, which is produced as a byproduct of yeast extract.

As a result of thorough research to resolve the above-noted issues, the inventors of the present invention have discovered that extract of yeast residue is effective in inhibiting cloudiness of a tea beverage.

Specifically, the present invention relates to:
(1) A cloudiness-inhibiting agent for a tea beverage, composed of yeast extract, wherein an amount of RNA content per solid content of the yeast extract is at least 50 wt%, protein content is at least 10 wt%, and dietary fiber content is at least 5 wt%;
(2) The cloudiness-inhibiting agent for the tea beverage according to (1) above, wherein mannan content makes up at least 60 wt% of the dietary fiber;
(3) The cloudiness-inhibiting agent for the tea beverage according to any of (1) or (2) above, wherein the yeast extract is obtained using yeast cell body residue;
(4) The cloudiness-inhibiting agent for the tea beverage according to any of (1) to (3) above, wherein the yeast is *Candida utilis*; and
(5) A method of inhibiting cloudiness in a tea beverage by including 0.01 to 1 wt% of the cloudiness-inhibiting agent for the tea beverage according to any of (1) to (4) in the tea beverage.

According to the present invention, a yeast extract having an excellent effect in inhibiting cloudiness in a tea beverage can be obtained from Torula yeast (*Candida utilis*), which is edible and known to be safe. By adding a small amount of the yeast extract to various kinds of tea beverages, cloudiness occurring in the tea beverages can be inhibited and quality can be improved. Therefore, the yeast extract can be used as a cloudiness-inhibiting agent for the tea beverages. Such yeast extract has no taste, and therefore does not impart a foreign taste to tea beverages to which the yeast extract is added. Also, unlike cases using plants or animals as raw materials, there is little risk of supply instability, price fluctuation, and quality variation when using yeast as the raw material. Moreover, cell body residue which remains after extracting the yeast extract or the like can be used as the raw material, and a yeast extract inhibiting flocculation/settling arising in foods and beverages can be obtained from this with a simple process. Cell body residue of Torula yeast is produced in large quantities as a byproduct of manufacturing yeast extract (a seasoning) and other useful constituents. The present invention is able to make effective use of this yeast cell body residue, and is therefore also very advantageous in view of cost and reduction in industrial waste.

Hereafter, a concrete description of the present invention is given. The yeast referenced in the present invention is a non-genetically modified yeast that may be used in food manufacture. Specific examples may include *Candida utilis*, *Saccharomyces cerevisiae*, and the like. Of these, *Candida utilis* is preferred.

The yeast cell body residue of the present invention is a residue remaining after yeast extract or useful constituents have been removed from yeast by an extraction process using one or more of hot water, acid/alkaline solution, autolysis, mechanical pulverization, a cell wall lytic enzyme, a proteolytic enzyme, ribonuclease, or deaminase. Examples include "KR yeast" manufactured by Kohjin Life Sciences Co., Ltd. Such residue is typically primarily composed of glucan, mannan, protein, lipids, and nucleic acid. Structurally, the glucan, mannan, protein, and other components form a conjugate and are expected to form strong bonds. Residue remaining after acid extraction from yeast, in particular, is highly active and is preferably used as the yeast cell body residue used to manufacture the cloudiness-inhibiting agent for the tea beverage according to the present invention.

A process of obtaining yeast extract inhibiting cloudiness in the tea beverage according to the present invention is, first, to wash the above-described yeast cell body residue with water. Specifically, water is added to the yeast cell body residue and a cell body suspension is prepared having a concentration of approximately 10 wt% of dried cell body weight. Preferably, the pH of the cell body suspension is adjusted to a weakly acidic region (pH 4.0 to 5.0), supernatant is removed by centrifugation, and the cleaned yeast cell body residue is obtained. This cleaning process is performed once, or two or more times. Next, water is added to the cleaned yeast cell body residue and the cell body suspension is prepared having a concentration of approximately 10 wt% of dried cell body weight, then the pH is adjusted to be neutral. The suspension is heated to between 70 and 100°C, and preferably to between 75 and 85°C. A heat treatment duration is preferably between 5 and 15 minutes, and is more preferably between 8 and 12 minutes. Next, sediment is removed with a centrifugal separator and a fraction containing RNA, dietary fiber, and protein is obtained as the supernatant. Yeast extract in which an amount of RNA content per solid content of the yeast extract is at least 50 wt%, and preferably at least 60 wt%; dietary fiber content is at least 5 wt%, and preferably at least 10 wt%; and protein content is at least 10 wt%, and preferably at least 12 wt%, has a high cloudiness-inhibiting effect on the tea beverage. Moreover, the effect is even higher when mannan content makes up at least 60 wt%, and preferably at least 70 wt%, of the dietary fiber. Meanwhile, as constituents having a strong taste, inosinic acid, guanylic acid, and glutamic acid content is preferably low.

An HPLC method is used in the present invention to measure the RNA content. GS-320HQ is used as a separation column, and 0.1 M sodium phosphate buffer (pH 7.0) is used as a mobile phase. Detection is performed at UV 260 nm. The RNA content is found from an area of a peak obtained by injecting the yeast extract. A hydrolysis method is used to measure the content amount of protein in the yeast extract. After hydrolyzing the yeast extract in 6 N hydrogen chloride at 110°C for 24 hours, pretreatment is performed and measurement is conducted with a fully automatic amino acid analyzer (manufactured by Hitachi Ltd.). The hydrolysis method is used to measure the dietary fiber content. The yeast extract is hydrolyzed in 1 N sulfuric acid at 110°C for 3.5 hours and is neutralized, after which mannose and glucose (hydrolysis products) are measured using liquid chromatography, and are converted to glucan/mannan. An RI detector is used for detection, an SP810 (Shodex) is used for the separation column, and ultrapure water is used for the mobile phase.

The yeast extract obtained using the manufacturing method described above, with yeast cell body residue as the raw material, can be used without alteration as a cloudiness-inhibiting agent for a tea beverage. Alternatively, when necessary, the yeast extract may be blended with other soluble constituents to produce a cloudiness-inhibiting agent. The agent is particularly effective with black teas as a field of use, but can be used in a broad range of tea beverages.

The tea beverage of the present invention is not particularly limited. However, specific examples may include a black tea beverage, a green tea beverage, a guava tea beverage, a coffee beverage, and the like. Intensity of the effect of the cloudiness-inhibiting agent according to the present invention differs according to the type, pH, and base material concentration of the beverage. Therefore, a preferred blending amount differs according to the type, pH, and concentration of the beverage. However, broadly speaking, the preferred blending amount is 0.01 to 1 wt% (as dried yeast extract), preferably 0.025 to 0.5 wt%, and more preferably 0.1 to 0.3 wt%.

The present invention is described in detail in exemplary embodiments below.

### <Exemplary Manufacture>

Using a 10 N sulfuric acid, a 10% cell body suspension of *Candida utilis* Cs 7529 strain (FERM BP-1656 strain) was adjusted to a pH of 3.5, then was subjected to a heat treatment at 60°C for 30 minutes, after which the suspension was separated into yeast extract and yeast cell body residue with a centrifugal separator. After this, water was added to the yeast cell body residue and a 15 wt% (dried weight) cell body suspension was prepared. After adjusting 2.4 kg of the 15% concentration yeast residue suspension to pH 4.8, solids and supernatant were separated by a centrifuge (Hitachi Centrifuge: CR21N) and the solids were collected. The solids were suspended in water, and solids and supernatant were once again separated by a centrifuge, and cleaned yeast cell body residue was obtained as the solids. The solids were suspended in water and adjusted to a 15 wt% (dried weight) suspension, after which the suspension was adjusted to a pH of 7.0. The suspension was heat treated at 80°C for 10 minutes, then cooling was performed with cool water. After this, the supernatant was collected by the centrifuge; concentrated by an evaporator; and freeze-dried to obtain approximately 30 g powdered yeast extract, which was designated as a cloudiness-inhibiting agent for a tea beverage. In the cloudiness-inhibiting agent, RNA content was 70.6%, dietary fiber content was 14.2 wt%, and protein content was 15.3 wt%. Mannan content made up 85.5 wt% of the dietary fiber.

### <Embodiment 1> Cloudiness Inhibiting Trial in Black Tea

A teabag containing 3.5 g of tea leaves ("Saara Premium Assam," Brook's Co., Ltd.) was immersed in 200 g hot (distilled) water at a temperature of approximately 98°C and was steeped for 2 minutes. After steeping, the teabag was removed. The solution was then filtered through a 10 µm filter in order to remove the fine tea leaves. The black tea produced was cooled to room temperature, after which 0.1 wt% of the cloudiness-inhibiting agent obtained in the exemplary manufacture was added to the black tea. The black tea with cloudiness-inhibiting agent obtained in this way was placed in a transparent glass bottle and refrigerated, and cloudiness was observed over time.

### <Embodiment 2>

Embodiment 2 was conducted similarly to Embodiment 1 except that 0.05 wt% of the cloudiness-inhibiting agent was added in Embodiment 1.

### <Embodiment 3>

Embodiment 3 was conducted similarly to Embodiment 1 except that 0.025 wt% of the cloudiness-inhibiting agent was added in Embodiment 1.

### <Comparative Example 1>

Comparative Example 1 was conducted similarly to Embodiment 1 except that the cloudiness-inhibiting agent was not added in Embodiment 1.

### <Comparative Example 2>

Comparative Example 2 was conducted similarly to Embodiment 1 except that 0.1 wt% of tyrosine was added in Embodiment 1.

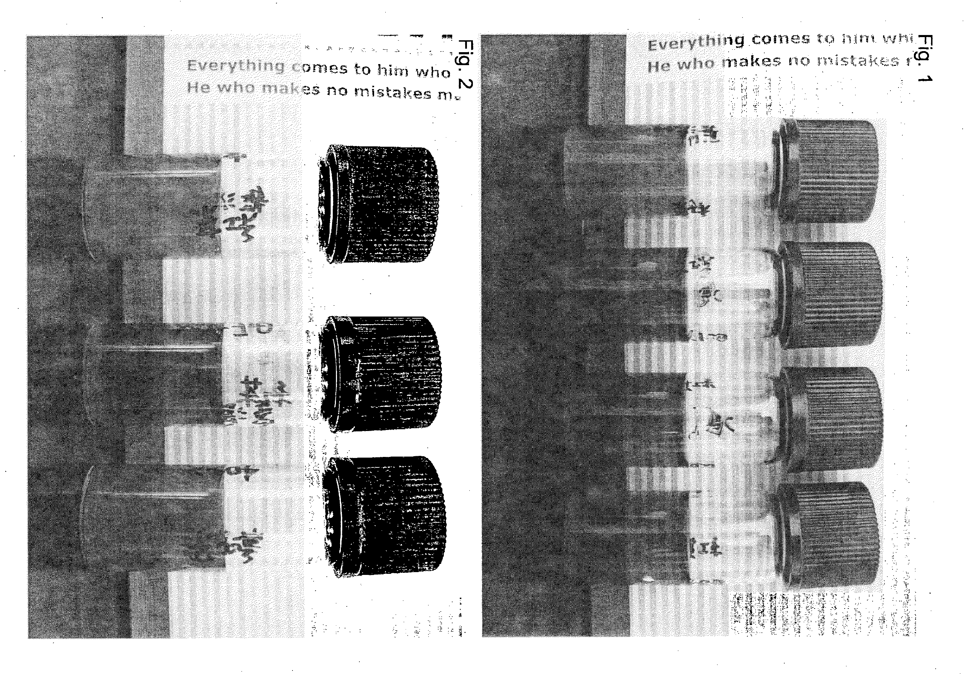

As a result of evaluation, cloudiness occurred immediately after refrigeration in Comparative Examples 1 and 2, whereas cloudiness was inhibited in Embodiments 1, 2, and 3. Moreover, cloudiness was inhibited in Embodiments 1, 2, and 3 even after two months of refrigeration. External appearances one day after beginning cooling are shown in Figs. 1 to 2.

As described above, by adding the cloudiness-inhibiting agent for tea beverages manufactured in the present invention ahead of time to a tea beverage where cloudiness may occur, cloudiness occurring during storage is inhibited, and accordingly a reduction in quality can be prevented. The cloudiness-inhibiting agent of the present invention can also be used in processed foods containing tea constituents.

[FIG. 1] is a photograph showing results of a cloudiness inhibiting trial in black tea (from right, Embodiment 1, Embodiment 2, Embodiment 3, Comparative Example 1).
[FIG. 2] is a photograph showing results of the cloudiness inhibiting trial in black tea (from right, Comparative Example 2, Embodiment 1, Comparative Example 1).

## Claims

1. A cloudiness inhibiting agent for a tea beverage, composed of yeast extract, wherein an amount of RNA content per solid content of the yeast extract is at least 50 wt%, protein content is at least 10 wt%, and dietary fiber content is at least 5 wt%.

2. The cloudiness-inhibiting agent for the tea beverage according to claim 1, wherein mannan content makes up at least 60 wt% of the dietary fiber.

3. The cloudiness-inhibiting agent for the tea beverage according to any one of claims 1 or 2, wherein the yeast extract is obtained using yeast cell body residue.

4. The cloudiness-inhibiting agent for the tea beverage according to any one of claims 1 to 3, wherein the yeast is Candida utilis.

5. A method of inhibiting cloudiness in a tea beverage by including 0.01 to 1 wt% of the cloudiness-inhibiting agent for the tea beverage according to any one of claims 1 to 4 in the tea beverage.

## Patentansprüche

1. Trübungs-inhibierendes Mittel für ein Teegetränk, das aus Hefeextrakt zusammengesetzt ist, wobei eine Menge an RNA-Gehalt pro Feststoffgehalt des Hefeextrakts mindestens 50 Gew.-%, der Proteingehalt mindestens 10 Gew.-% und der Gehalt an Ballaststoffen mindestens 5 Gew.-% beträgt.

2. Trübungs-inhibierendes Mittel für das Teegetränk nach Anspruch 1, wobei der Mannan-Gehalt mindestens 60 Gew.-% der Ballaststoffe ausmacht.

3. Trübungs-inhibierendes Mittel für das Teegetränk nach einem der Ansprüche 1 oder 2, wobei der Hefeextrakt unter Verwendung von Hefezellkörperresten erhalten wird.

4. Trübungs-inhibierendes Mittel für das Teegetränk nach einem der Ansprüche 1 bis 3, wobei die Hefe *Candida utilis* ist.

5. Verfahren zur Inhibierung der Trübung in einem Teegetränk durch Einbringen von 0,01 bis 1 Gew.-% des Trübungs-inhibierenden Mittels für das Teegetränk nach einem der Ansprüche 1 bis 4 in das Teegetränk.

## Revendications

1. Agent inhibiteur de trouble pour une boisson au thé, composé d'un extrait de levure, dans lequel une quantité de teneur en ARN par teneur en solide de l'extrait de levure est au moins de 50 % en poids, la teneur en protéines est au moins de 10 % en poids et la teneur en fibres alimentaires est au moins de 5 % en poids.

2. Agent inhibiteur de trouble pour la boisson au thé selon la revendication 1, dans lequel la teneur en mannane représente au moins 60 % en poids de la fibre alimentaire.

3. Agent inhibiteur de trouble pour la boisson au thé selon l'une quelconque des revendications 1 ou 2, dans lequel l'extrait de levure est obtenu en utilisant un résidu de corps cellulaire de levure.

4. Agent inhibiteur de trouble pour la boisson au thé selon l'une quelconque des revendications 1 à 3, dans lequel la levure est Candida utilis.

5. Procédé d'inhibition d'un trouble dans une boisson au thé par l'inclusion de 0,01 à 1 % en poids de l'agent inhibiteur de trouble pour la boisson au thé selon l'une quelconque des revendications 1 à 4 dans la boisson au thé.
